Europäisches Patentamt

European Patent Office

Office européen des brevets

(19)

(11) **EP 0 654 655 B1**

(12) **FASCICULE DE BREVET EUROPEEN**

(45) Date de publication et mention
de la délivrance du brevet:
**08.10.1997   Bulletin 1997/41**

(51) Int Cl.⁶: **G01J 9/02**

(21) Numéro de dépôt: **94402581.6**

(22) Date de dépôt: **15.11.1994**

(54) **Interféromètre optique achromatique, du type à décalage trilatéral**

Optische achromatische Interferometer vom Typ trilateraler Phasenverschiebung

Optical achromatic interferometer of the trilateral shearing type

(84) Etats contractants désignés:
**DE**

(30) Priorité: **24.11.1993   FR 9314063**

(43) Date de publication de la demande:
**24.05.1995   Bulletin 1995/21**

(73) Titulaire: **OFFICE NATIONAL D'ETUDES ET DE RECHERCHES AEROSPATIALES(O.N.E.R.A.) 92322 Châtillon Cédex (FR)**

(72) Inventeurs:
• **Primot, Jérôme
  F-92320 Chatillon (FR)**
• **Sogno, Ludovic
  F-75013 Paris (FR)**

(74) Mandataire: **Plaçais, Jean-Yves et al
Cabinet Netter,
40, rue Vignon
75009 Paris (FR)**

(56) Documents cités:
**EP-A- 0 538 126          DD-A- 213 057
US-A- 4 518 854**

• APPLIED OPTICS, vol. 32, no. 31, 1 novembre 1993, New York US, pages 6242-6249; J. PRIMOT : 'Three-wave lateral shearing interferometer'
• OPTICAL ENGINEERING, vol. 29, no. 10, octobre 1990, Bellingham US, pages 1239-1242; F. RODDIER, 'Variations on a Hartmann theme'

## Description

L'invention est destinée à l'analyse de la surface d'onde d'un faisceau de lumière.

Ce type d'analyse permet le contrôle des éléments optiques, ainsi que la qualification des appareils optiques. Il permet aussi l'étude de phénomènes physiques non directement mesurables, tels que les variations d'indice optique au sein de milieux turbulents que l'on peut rencontrer à la traversée de l'atmosphère terrestre, ou bien dans une veine de soufflerie, par exemple.

On connaît l'analyseur dit de "Hartmann-Shack", décrit dans "Phase measurements systems for adaptative optics", J.C. WYANT, AGARD Conf. Proc., No 300, 1981. Le principe général de fonctionnement consiste à conjuguer optiquement le défaut de phase à analyser avec une grille de micro-lentilles. Dans le plan commun des foyers des micro-lentilles, on observe un interférogramme constitué par un réseau de taches déformé suivant les gradients de la surface d'onde.

Ce type d'analyseur de surface d'onde a l'avantage de fonctionner en lumière polychromatique, sous réserve que le défaut de différence de marche à détecter ne dépende pas de la longueur d'onde. Le rendement lumineux est très bon; par contre, la sensibilité et la dynamique ne sont réglables qu'en changeant la grille de micro-lentilles.

Dans sa Demande de brevet européen EP-A-0538126, le Demandeur a décrit un interféromètre à décalage trilatéral. Par un montage à base de miroirs, on subdivise optiquement, dans un plan conjugué du défaut, le faisceau à analyser en trois sous-faisceaux. Un traitement optique particulier des trois sous-faisceaux ainsi obtenus permet d'observer un interférogramme qui est sensible aux gradients de la surface d'onde, et ce avec une possibilité d'ajustement continu de la dynamique et de la sensibilité. Il est également possible d'estimer l'erreur sur la mesure à partir de la mesure elle-même; enfin, le système de franges d'interférences obtenu est facile à interpréter, et particulièrement adapté à des techniques d'analyse basées sur des transformations de Fourier. Par contre, cet appareil ne fonctionne qu'en lumière monochromatique, et son rendement lumineux n'est pas aussi élevé que celui de l'analyseur de Hartmann-Shack.

Il paraît donc vivement souhaitable d'avoir un interféromètre possédant à la fois la souplesse de réglage de l'interféromètre à décalage trilatéral de EP-A-0538126, et le rendement lumineux de l'analyseur de Hartmann-Shack.

La présente invention a pour but d'apporter un progrès en ce sens.

L'invention peut être considérée sous forme de procédé ou de dispositif.

Le procédé proposé est du type dans lequel :

a) on place un réseau de diffraction à maillage bi-dimensionnel dans un plan perpendiculaire au faisceau de lumière à analyser, et optiquement conjugué du plan d'analyse de la surface d'onde considérée, ce qui provoque une diffraction du faisceau en différents sous-faisceaux, dus aux différents ordres de diffraction, et

b) on crée et on observe dans un plan une image formée par l'interférence des sous-faisceaux, image dont les déformations sont liées au gradient de la surface d'onde analysée.

Ce qui précède relève d'une interprétation du fonctionnement d'un analyseur du type Hartmann-Shack. Cette interprétation, qui ne correspond pas à la description classique de cet analyseur a été esquissée dans la publication "Variations on a Hartman theme", F. RODDIER, SPIE, TUXON, 1990.

Selon un aspect de l'invention, l'opération b) comprend :

b1) la focalisation conjointe des sous-faisceaux issus du plan du réseau, en un plan focal dit "intermédiaire",

b2) au voisinage de ce plan focal, le filtrage des sous-faisceaux par un masque propre à y sélectionner au moins trois ordres de diffraction distincts,

b3) la reprise optique des sous-faisceaux sélectionnés, pour les amener à un plan, dit "de sensibilité nulle", conjugué du plan du réseau, et

b4) l'observation de l'image d'interférence dans un plan de travail, situé à distance choisie du plan de sensibilité nulle.

Ceci permet un fonctionnement en lumière polychromatique. En ajustant la distance entre le plan de travail et le plan de sensibilité nulle, on règle continûment la sensibilité et la dynamique de l'appareil.

Les trois sous-faisceaux extraits possèdent des intensités de préférence semblables, et des impacts non alignés dans le plan focal intermédiaire, avantageusement des impacts placés aux sommets d'un triangle équilatéral.

Ceci peut être réalisé à l'aide de réseaux de diffraction à maillage hexagonal ou rectangulaire. Ils définissent respectivement, dans le plan focal intermédiaire, un maillage réciproque hexagonal régulier ou rectangulaire; ce maillage réciproque est la base de ce qu'on appelle ici les différents ordres de diffraction. Le motif élémentaire de maille du réseau de diffraction est défini pour obtenir trois ordres de diffraction, d'intensités proches, situés à trois des sommets d'un hexagone du maillage réciproque, définissant un triangle équilatéral.

Le masque de filtrage placé au plan focal peut être soit transparent, soit réfléchissant, soit une combinaison de ces deux modes.

Elle couvre également les dispositifs susceptibles de permettre la mise en oeuvre du procédé proposé. Un tel dispositif est du type comprenant :

- une optique d'entrée, conjuguant un plan de référence avec le plan dans lequel est analysée la surface d'onde,

- un réseau à maillage bidimensionnel, placé dans ce plan de référence, perpendiculairement au faisceau, ce qui provoque une diffraction du faisceau en différents sous-faisceaux dus aux différents ordres de diffraction, et

- des moyens de traitement optique et d'observation de l'image formée par l'interférence des sous-faisceaux, image dont les déformations sont liées au gradient de la surface d'onde analysée.

Selon l'invention, les moyens de traitement optique et d'observation comprennent :

- une première optique pour focaliser conjointement les sous-faisceaux issus du plan du réseau en un plan focal dit "intermédiaire",

- dans ce plan focal ou à proximité, un masque propre à sélectionner parmi les sous-faisceaux, ceux qui proviennent d'au moins trois ordres de diffraction distincts,

- une seconde optique pour amener les sous-faisceaux sélectionnés jusqu'à un plan, dit "de sensibilité nulle", conjugué du plan du réseau, et

- des moyens d'observation de l'image d'interférence dans un plan de travail, situé à distance choisie du plan de sensibilité nulle.

Bien entendu, le dispositif est susceptible des aménagements prévus à propos du procédé.

D'autres caractéristiques et avantages de l'invention apparaîtront à l'examen de la description détaillée ci-après, et des dessins annexés, sur lesquels :

- la figure 1 est le schéma optique de principe d'un dispositif permettant la mise en oeuvre de l'invention;

- la figure 1A est une vue partielle en perspective du même dispositif;

- les figures 2A à 2F présentent un maillage plan, la maille élémentaire et la constitution d'un réseau de diffraction bidimensionnel;

- la figure 3A illustre un maillage et son maillage réciproque;

- les figures 3B et 3C illustrent des maillages hexagonaux et rectangulaires, et leurs maillages réciproques respectifs;

- les figures 4A à 4C sont des schémas explicatifs permettant de mieux comprendre l'invention;

- les figures 5 et 5A sont deux illustrations correspondantes permettant de mieux comprendre le fonctionnement du masque selon la présente invention;

- la figure 6 illustre une variante du masque;

- la figure 7 illustre une variante correspondante du dispositif selon l'invention;

- les figures 8A à 8C illustrent d'autres types de réseaux bidimensionnels utilisables selon l'invention;

- les figures 9A et 9B illustrent une variante préférentielle respectivement du motif élémentaire et du réseau selon l'invention; et

- les figures 10A et 10B illustrent un réseau particulier et l'interférogramme obtenu selon l'invention.

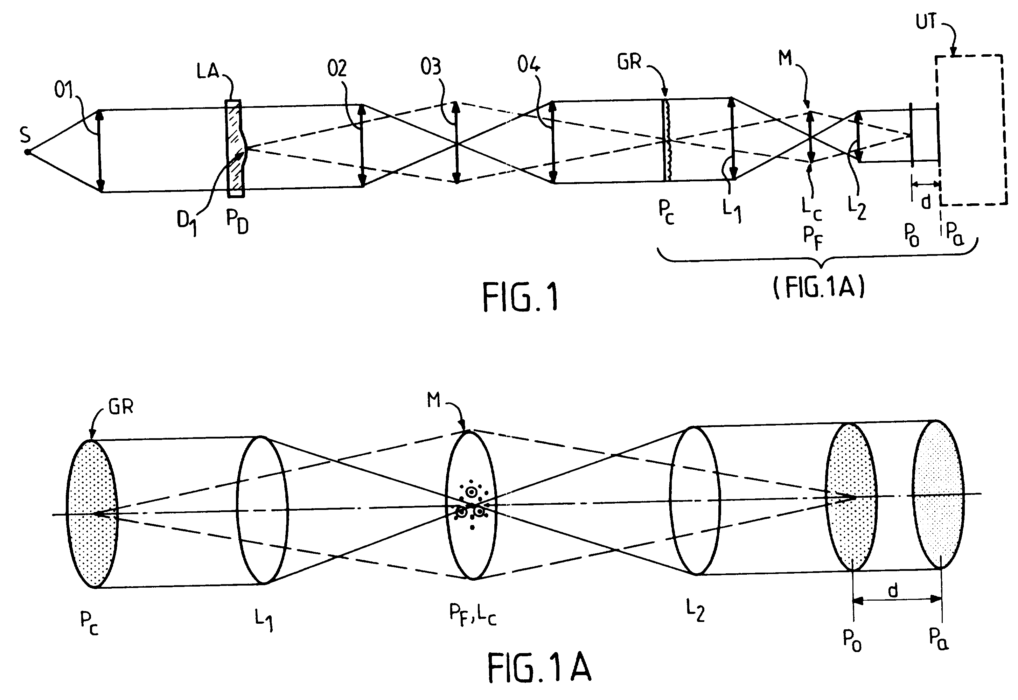

Sur la figure 1, une source de lumière S est placée au foyer d'une lentille collimatrice $O_1$. Contrairement à ce qui était le cas avec la Demande de brevet antérieure EP-A-0538126, la source de lumière S n'a pas besoin d'être monochromatique.

Le faisceau de lumière parallèle issu de la lentille $O_1$ illumine un échantillon à tester, qui est représenté schématiquement comme une lame à faces parallèles LA, placée dans le plan $P_D$, et présentant un défaut de planéité $D_1$. Bien entendu, l'échantillon peut être tout autre système optique (une lentille ou un miroir, en particulier un miroir de télescope), ou même simplement une zone d'un milieu gazeux ou liquide qui serait perturbé par un écoulement par exemple.

Ensuite, on utilise de préférence un système afocal constitué par exemple de deux lentilles $O_2$ et $O_4$, avec en position intermédiaire une lentille de champ $O_3$. Ce système afocal a pour fonction de créer, dans un plan $P_C$, une image du plan $P_D$. D'autres moyens réalisant une conjugaison optique entre ces deux plans peuvent convenir.

Le but visé est de réaliser une adaptation du diamètre du faisceau, entre les plans $P_D$ et $P_C$.

La suite du montage est illustrée de façon plus détaillée, en semi-perspective, sur la figure 1A.

Dans le plan $P_C$, on place un réseau GR, décrit plus loin.

Le montage comprend ensuite un système afocal, constitué des lentilles $L_1$ et $L_2$, avec de préférence une lentille de champ $L_0$, placée au voisinage du plan de focalisation $P_F$ de la lentille $L_1$. Au voisinage de ce plan de focalisation $P_F$, et préférentiellement dans ce plan

$P_F$, se trouve un masque M décrit lui aussi plus loin.

Ce système afocal crée un plan $P_0$, dit plan de sensibilité nulle, conjugué du plan $P_C$. Selon l'invention, l'observation de l'image d'interférence est réalisée dans un plan $P_S$, situé à distance choisie d du plan $P_0$.

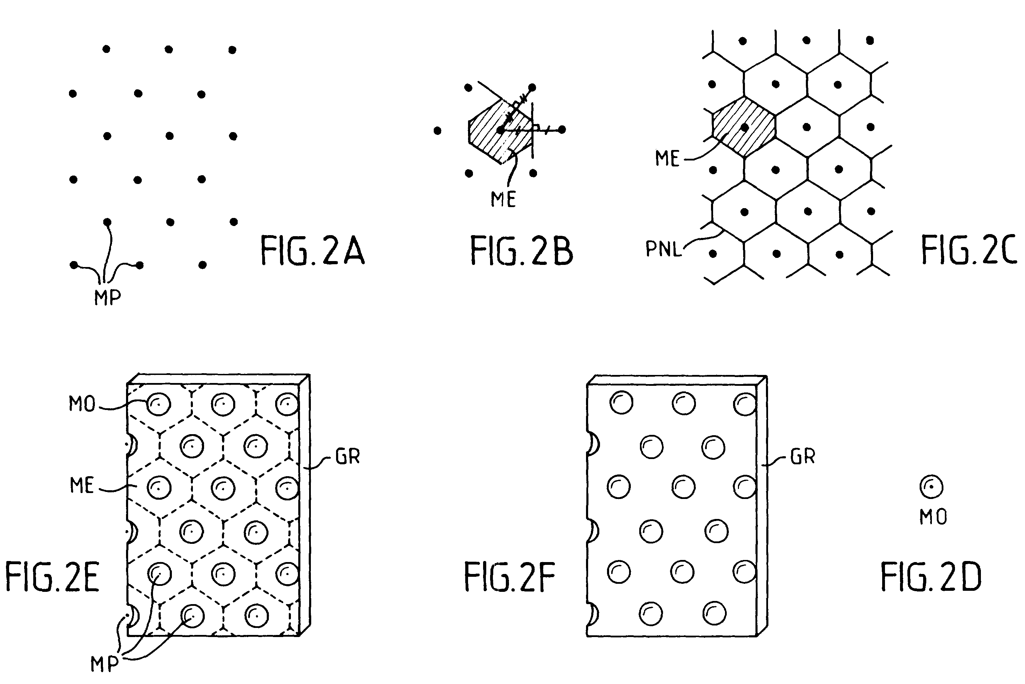

Les figures 2A à 2F présentent un réseau bidimensionnel (GR) et son mode de constitution. Un maillage plan (MP) est constitué par un ensemble de points disposés régulièrement suivant deux directions (Figure 2A). Ces points définissent une maille élémentaire (ME, figure 2B). La maille élémentaire est la plus petite surface permettant de réaliser un pavage non lacunaire (PNL) du plan de maillage selon les deux directions qui le définissent (Figure 2C). Le périmètre de la maille élémentaire est le polygone de surface minimale dont les côtés sont supportés par les médiatrices des segments relient un point quelconque du plan à chacun de ses plus proches voisins (Figure 2B).

Le réseau GR est un réseau bidimensionnel. On appelle réseau bidimensionnel (GR) la répétition à volonté (en théorie, à l'infini) d'un motif élémentaire (MO, figure 2D) disposé selon un maillage plan (MP, figure 2E). Le motif élémentaire conditionne la répartition des intensités des ordres de diffraction du réseau. Un maillage plan peut définir des mailles élémentaires hexagonales, rectangulaires ou carrées. Le maillage lui-même n'est pas visible dans le réseau final GR (Figure 2 F).

On passe du maillage du réseau considéré au maillage des ordres de diffraction appelé maillage réciproque par une transformation (notée T.F. sur les dessins). La maille élémentaire va conditionner le maillage réciproque supportant les ordres diffractés dans le plan $P_F$. Physiquement, cette transformation peut s'interpréter de la façon suivante : dans le plan focal intermédiaire $P_F$, on obtient la transformée de Fourier spatiale (bidimensionnelle) de l'amplitude complexe de l'onde lumineuse incidente, après traversée du réseau GR.

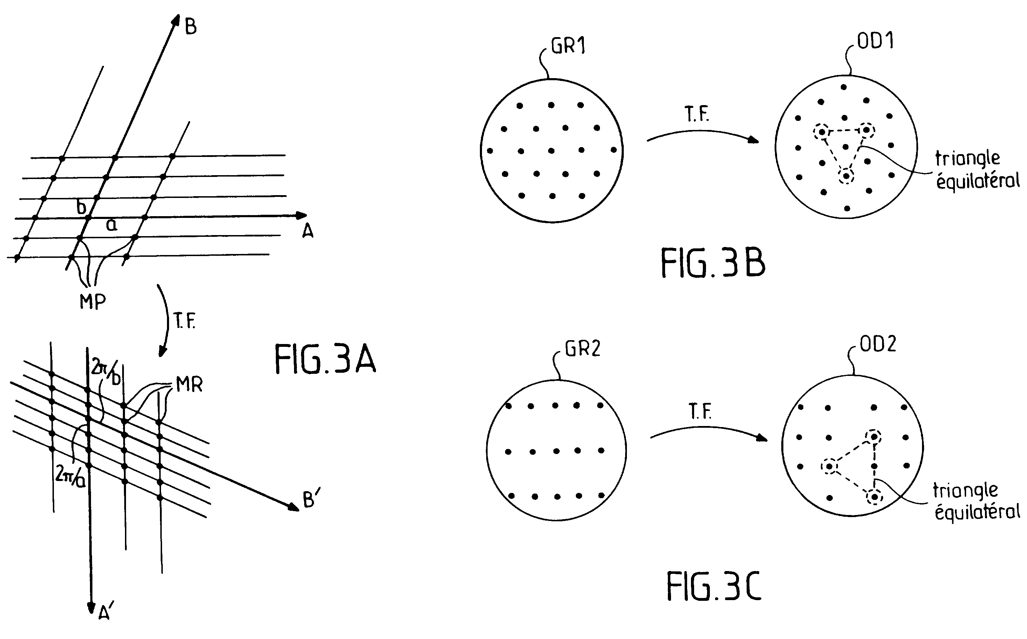

La figure 3A montre comment on construit un maillage plan MP à partir de ses deux axes A et B. Ces axes ne sont pas nécessairement perpendiculaires l'un à l'autre. La maille élémentaire est répétée avec une périodicité a le long de l'axe A, et b le long de l'axe B.

Pour passer au maillage réciproque MR, on construit un axe A' perpendiculaire à A et un axe B' perpendiculaire à B. On considère deux vecteurs de norme $2\pi/a$ et $2\pi/b$, respectivement associés aux axes A' et B'.

Les points du maillage réciproque sont ceux de ce plan qui sont repérés par des vecteurs G définis de la manière suivante :

$$G = A'.m + B'.n$$

où m et n sont des entiers, positifs ou négatifs, quelconques.

Une condition intéressante pour la mise en oeuvre de la présente invention est que les maillages retenus fournissent un maillage réciproque supportant trois ordres de diffraction placés suivant les sommets d'un triangle équilatéral dans le plan $P_F$. Ceci est illustré sur la figure 3B en OD1 pour le réseau GR1, et sur la figure 3C en OD2 pour le réseau GR2.

Dans le plan de focalisation PF, ou à proximité, on place alors un masque M propre à sélectionner les trois ordres de diffraction désirés, qui doivent être non alignés, de préférence d'intensités semblables et si possible maximales.

Il est envisageable d'utiliser un nombre d'ordres de diffraction supérieur à trois, par exemple pour des raisons de rendement lumineux ou de difficultés de réalisation de réseaux spécifiques. Ceci se fera cependant au détriment de la simplicité d'analyse de l'interférogramme et de la facilité de réglage de la sensibilité.

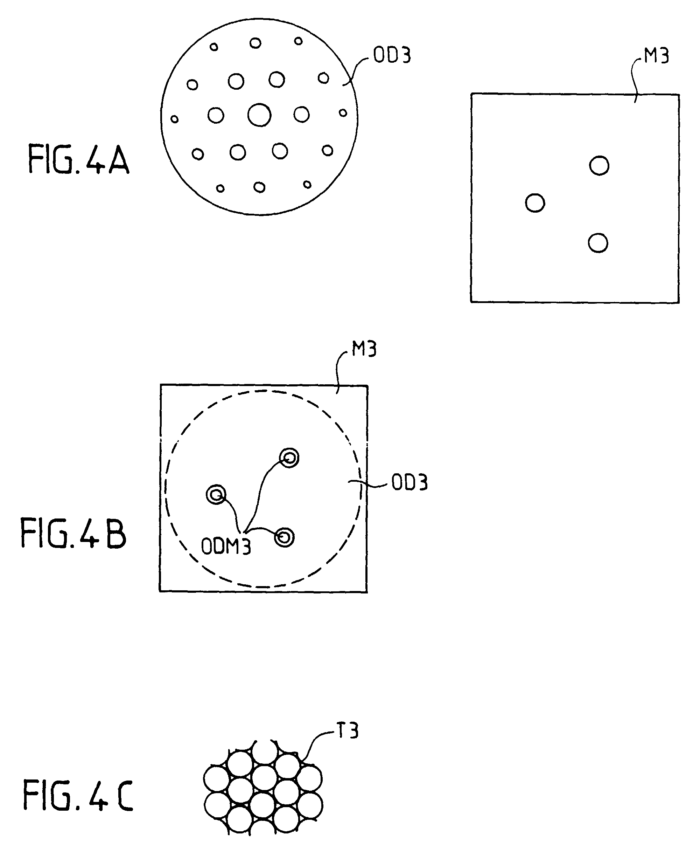

Les figures 4 à 4C illustrent le principe de fonctionnement de l'invention selon le montage de la figure 1A.

La figure 4A montre les ordres de diffraction $OD_3$ obtenus dans le plan $P_F$ avec un réseau à maillage hexagonal. Le masque $M_3$ est un écran percé de trois trous choisis pour prélever trois ordres de diffraction situés aux sommets d'un triangle équilatéral. Seuls traversent donc le masque les ordres de diffraction illustrés en $ODM_3$ sur la figure 4B. On obtient alors dans le plan d'analyse PA un système de taches $T_3$ (figure 4C), qui permet d'obtenir des informations sur les défauts de phase de la surface d'onde, par exemple le défaut $D_1$ de la figure 1.

Pour assurer un bon contraste des franges d'interférence dans le plan $P_a$, il est souhaitable que les intensités des trois ordres de diffraction sélectionnés par le masque soient à peu près égales.

Préférentiellement, on cherchera à translater longitudinalement le plan d'observation $P_a$ dans une direction telle que le contraste des franges d'interférence soit sensiblement indépendant de la distance d entre ce plan $P_a$ et le plan de sensibilité nulle $P_0$.

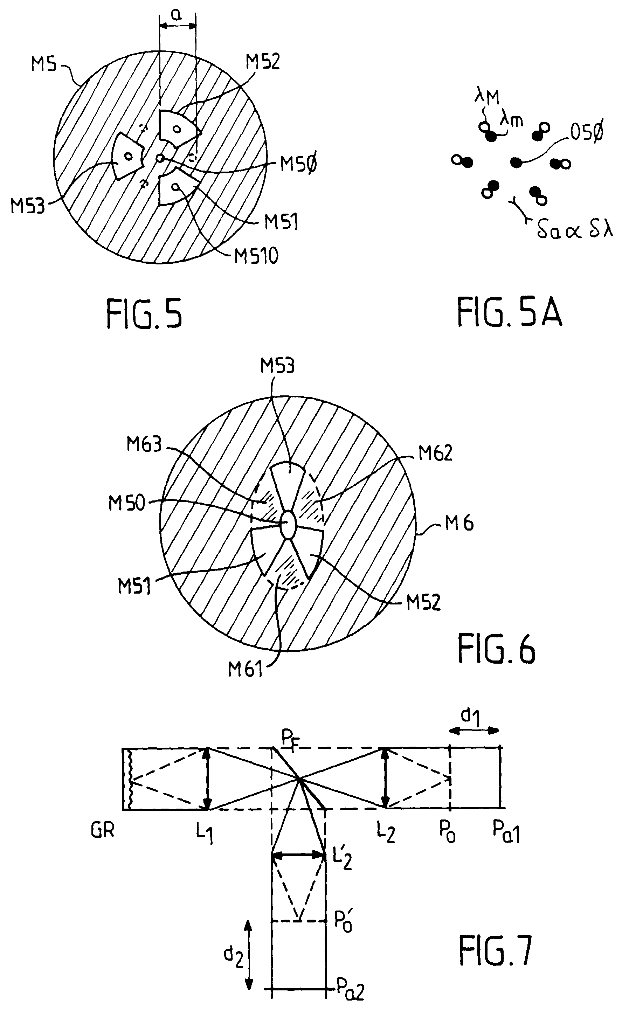

Un exemple de masque est illustré sur la figure 5, où le masque $M_5$ comporte trois orifices $M_{51}$, $M_{52}$ et $M_{53}$ en forme de secteurs de couronnes circulaires régulièrement réparties autour de l'axe central $M_{50}$. Au centre de chaque secteur comme $M_{51}$, l'ordre de diffraction pour le centre de la bande optique considérée est illustré en $M_{510}$.

Si l'ordre central $O_{50}$ est indépendant de la longueur d'onde, la position des autres ordres de diffraction dépend de la longueur d'onde. Ainsi, la figure 5A montre les positions correspondant à $\lambda_m$ et $\lambda_M$, valeurs minimale et maximale de la bande de longueurs d'onde optiques traitées. L'écart $\delta\alpha$ entre les positions extrêmes des deux taches observées est proportionnel à l'écart $\delta\lambda$ des longueurs d'onde, avec $\delta\lambda = \lambda_M-\lambda_m$.

Lorsque la largeur du domaine spectral augmente, les ordres diffractés dans le plan focal intermédiaire $P_F$ s'étalent. La surface utilisée du masque en transmission augmente avec l'écart des longueurs d'onde. En d'autres termes, c'est au niveau du masque que peut être définie la largeur du domaine spectral d'analyse.

Sur la figure 6, entre les secteurs $M_{51}$, $M_{52}$ et $M_{53}$, sont interposés des secteurs réfléchissants respectivement $M_{61}$, $M_{62}$ et $M_{63}$. Le centre $M_{50}$ est absorbant.

Un tel masque peut être utilisé dans le montage illustré sur la figure 7. Dans cette variante, il n'y a pas de lentille de champ $L_C$. La lentille $L_2$ collimate les ordres de diffraction transmis par les secteurs $M_{51}$ à $M_{53}$. Dans la direction perpendiculaire, une autre lentille $L'_2$ collimate les ordres de diffraction réfléchis par les secteurs $M_{61}$ à $M_{63}$. L'impossibilité ou la difficulté de prévoir une lentille de champ $L_C$ dans ce montage peut être compensée par un choix convenable des deux lentilles de collimation $L_2$ et $L'_2$. Le montage possède alors deux plans d'analyse $PA_1$ et $PA_2$, qui peuvent être choisis à des distances différentes $D_1$ et $D_2$ de leurs plans respectifs de sensibilité nulle $P_0$ et $P'_0$. Les deux interférogrammes ainsi obtenus permettent d'analyser une même surface d'onde selon deux échelles de dynamique indépendantes.

Les formes des secteurs illustrés sur la figure 6 sont adaptées pour tenir compte du fait que le masque $M_6$ est incliné sur l'axe du faisceau incident issu de la lentille $L_1$, comme visible sur la figure 7.

Ce montage convient bien dans le cas de réseaux hexagonaux, avec une maille élémentaire qui possède une symétrie centrale, car il existe alors six ordres d'égale intensité, qui forment deux triangles équilatéraux regroupés à la manière d'une étoile de David, d'où l'intérêt d'un masque tel que $M_6$, réalisé sur une couronne elliptique.

La configuration de la figure 7 permet d'enregistrer simultanément deux interférogrammes d'une même surface d'onde.

Les réseaux bidimensionnels utilisés dans l'invention peuvent être des réseaux de phase ou des réseaux dits d'intensité.

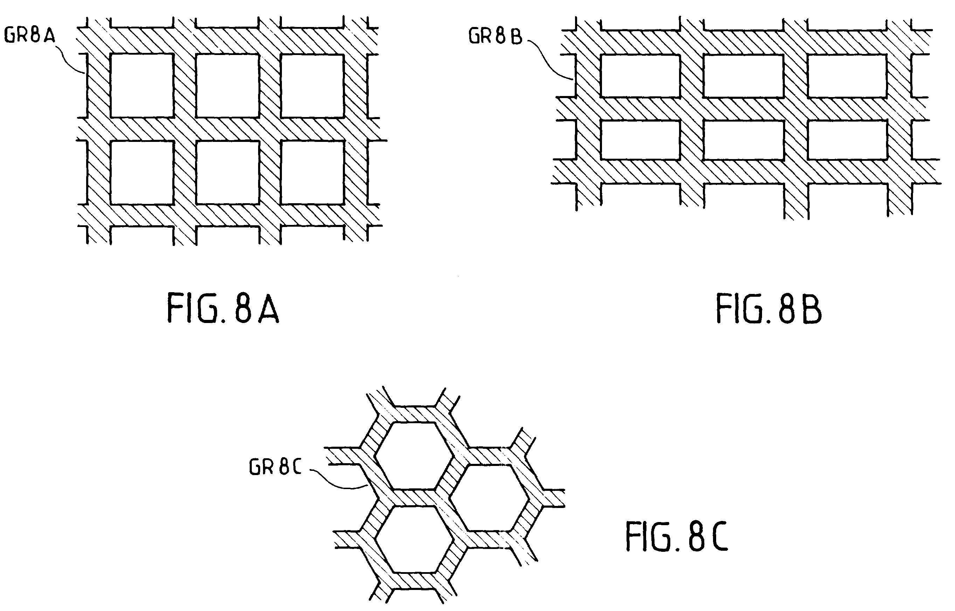

Les figures 8 présentent quelques exemples de réseaux d'intensité. La figure 8A illustre un réseau GR8A du type de Ronchi croisé à base carrée. La figure 8B illustre un réseau GR8B du type Ronchi croisé à base rectangulaire. La figure 8C illustre un réseau GR8C en nid d'abeilles. Les zones hachurées sur ces figures peuvent être, soit de transmission nulle, soit de transmission unité. La largeur des zones peut être adaptée suivant les besoins, pourvu que l'on ne change pas la taille de la maille.

Le réseau GR8C fournit une meilleure symétrie pour la sélection de trois ordres placés aux sommets d'un triangle équilatéral.

Il est possible d'optimiser le rendement lumineux de ces réseaux, en jouant sur le rapport entre les zones sombres et les zones transparentes. En utilisant un réseau d'intensité en partie réfléchissant et en partie transparent, on peut envisager un système à deux voies.

En variante, les réseaux de phase peuvent être utilisés, en particulier des réseaux de micro-lentilles.

Cependant, les meilleurs réseaux, selon l'opinion du Demandeur, sont des réseaux de phase à maille élémentaire hexagonale optimisant le transfert de l'énergie lumineuse dans trois ordres de diffraction placés autour de l'ordre zéro et situés aux sommets d'un triangle équilatéral.

Ces réseaux sont réalisés en matériaux transparents ou réfléchissants, aux longueurs d'onde d'analyse, et formés de trièdres à symétrie ternaire, situés aux centres des mailles élémentaires hexagonales, et orientés de façon que les arêtes interceptent les sommets des mailles élémentaires. Un trièdre constitue le motif élémentaire d'un tel réseau.

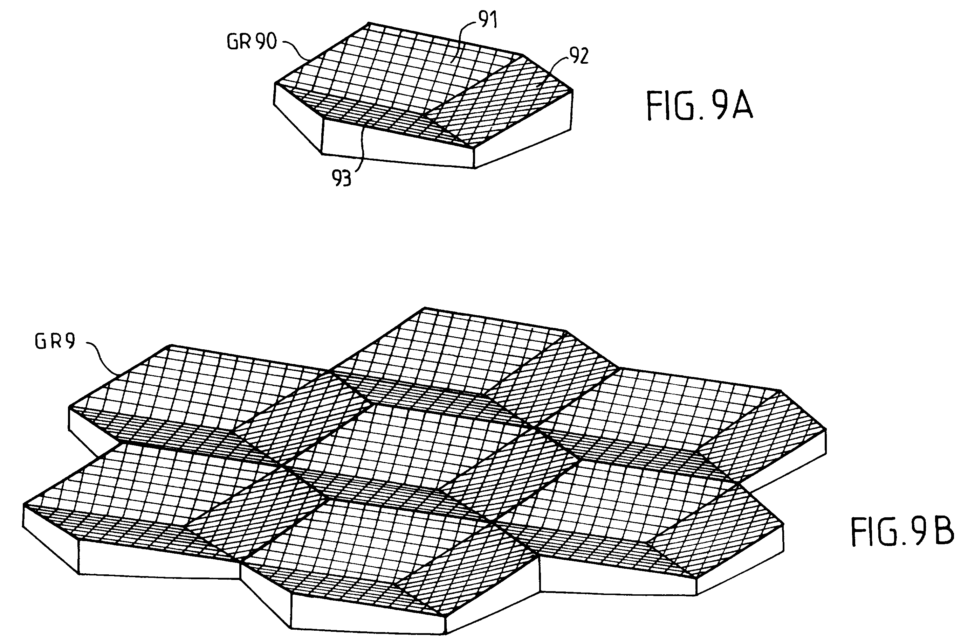

Pour que le rendement soit réellement optimal, la surface du motif élémentaire doit être, si possible, égale à la surface de la maille élémentaire, ce qui est réalisé avec la configuration présentée figure 9A pour un trièdre centré sur une maille élémentaire. Le réseau ainsi réalisé est non lacunaire et les faces du trièdre sont des losanges de mêmes dimensions (91, 92, 93).

L'inclinaison de ces losanges par rapport au plan du réseau est calculée pour renforcer les trois ordres de diffraction placés autour de l'ordre zéro et situés aux sommets d'un triangle équilatéral. Cette inclinaison "mécanique" est calculée en fonction de l'indice de réfraction du matériau dans lequel est fabriqué le réseau, du pas du maillage et du domaine de longueurs d'onde dans lequel s'effectue l'analyse.

L'inclinaison optimale des losanges par rapport au plan du réseau étant faible, la réalisation de tels réseaux est délicate.

Un moyen particulièrement avantageux pour la réalisation de ce type de réseau est décrit dans le Brevet français FR-A-2 665 955 du Demandeur. Il opère par contre-collage de résines d'indices proches et permet ainsi d'augmenter l'inclinaison mécanique (à caractéristiques désirées égales).

Les premiers travaux du Demandeur sur ce nouveau réseau ont montré qu'il permet d'obtenir un rendement lumineux de l'ordre de 50 % en lumière monochromatique, dans le montage de la figure 1.

Par ailleurs, le système de franges enregistré dans le plan analyse est achromatique, sous réserve que le défaut de différence de marche à détecter ne dépende pas de la longueur d'ondes d'étude.

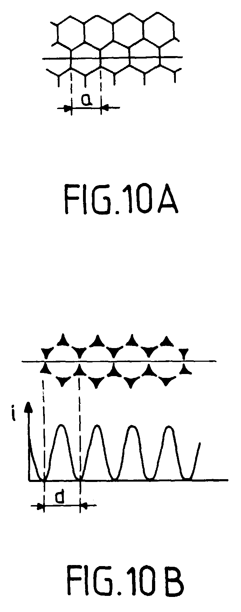

On se réfère aux figures 10A et 10B.

On considère par exemple le maillage élémentaire de motif hexagonal régulier et de pas a (figure 10A).

L'interférogramme obtenu dans le plan $P_a$ est également supporté par un maillage bidimensionnel. L'interférogramme est constitué de taches lumineuses (figure 10B, en haut) dont l'intensité est sinusoïdale, le long de l'un des axes des taches (figure 10B, en bas). L'espacement d entre deux franges blanches, c'est-à-dire deux maxima d'interférence est lié à l'angle a entre deux ondes par la relation :

$$d = \alpha/\lambda$$

Or, pour un réseau bidimensionnel de même pas dans les deux directions, l'angle entre les ondes se déduit de la connaissance du pas a du réseau et de la longueur d'onde d'étude λ par la relation :

$$\alpha = \lambda/a$$

Le rapprochement entre ces deux relations montre que l'espacement entre les franges est indépendant de la longueur d'onde, et égal au pas du réseau dans la direction considérée.

C'est pourquoi l'interférogramme obtenu selon l'invention est achromatique.

Dans la Demande de brevet EP-A-0538126, on a également proposé une technique d'analyse des images d'interférence obtenues, afin d'accéder aux gradients des défauts de phase de la surface d'onde, puis aux courbures locales de celle-ci, et même à une estimation de l'erreur sur les mesures effectuées. Ces techniques sont directement applicables au système de franges d'interférences obtenues selon la présente invention.

Les montages interférométriques selon l'invention, proposés ici pour l'analyse de la surface d'onde lumineuse présentent les avantages suivants :

- ils fonctionnent en lumière polychromatique,

- leur sensibilité est continûment réglable à partir de zéro, en ajustant la distance entre le plan d'analyse et le plan dit "de sensibilité nulle", et ce éventuellement sur plusieurs voies,

- l'intensité lumineuse des franges d'interférence obtenues est d'allure sinusoïdale dans plusieurs directions. Il est donc facile d'échantillonner les figures d'interférences, aux fins d'automatiser l'analyse,

- le rendement lumineux est amélioré, par les différents moyens proposés pour l'optimisation des réseaux, et en particulier avec le nouveau type de réseau ici proposé,

- enfin, l'erreur sur la mesure peut être estimée à partir de la mesure elle-même.

**Revendications**

1. Procédé pour l'analyse de la surface d'onde d'un faisceau de lumière, dans lequel:

   a) on place un réseau de diffraction (GR) à maillage bidimensionnel dans un (P$_C$) plan perpendiculaire au faisceau, optiquement conjugué du plan d'analyse de la surface d'onde (P$_D$), ce qui provoque une diffraction du faisceau en différents sous-faisceaux, dûs aux différents ordres de diffraction, et

   b) on crée et on observe dans un plan (P$_a$) l'image formée par l'interférence des sous-faisceaux, image dont les déformations sont liées aux gradients de la surface d'onde analysée,

caractérisé en ce que l'opération b) comprend:

   b1) la focalisation conjointe des sous-faisceaux issus du plan du réseau, en un plan focal intermédiaire (P$_F$),

   b2) au voisinage de ce plan focal, le filtrage des sous-faisceaux par un masque (M) propre à y sélectionner au moins trois ordres de diffraction distincts,

   b3) la reprise optique des sous-faisceaux sélectionnés, pour les amener à un plan (P$_0$), dit de sensibilité nulle, conjugué du plan du réseau, et

   b4) l'observation de l'image d'interférence dans un plan de travail (P$_a$), situé à distance choisie (d) du plan de sensibilité nulle.

2. Procédé selon la revendication 1, caractérisé en ce qu'à l'opération b2), le masque (M) est agencé pour extraire au moins trois sous-faisceaux possédant des intensités semblables, et des impacts non alignés dans le plan focal intermédiaire.

3. Procédé selon la revendication 2, caractérisé en ce que le masque (M) est agencé pour extraire au moins trois sous-faisceaux possédant des impacts placés aux sommets d'un triangle équilatéral dans le plan focal intermédiaire.

4. Procédé selon la revendication 3, caractérisé en ce que le réseau (GR1) présente une maille élémentaire hexagonale et un motif (GR8C) tels que le maillage réciproque supporte trois ordres de diffraction placés aux sommets d'un triangle équilatéral et d'intensité proches (OD1).

5. Procédé selon la revendication 3, caractérisé en ce que le réseau (GR2) présente une maille élémentaire rectangulaire et un motif (GR8B), tels que le maillage réciproque supporte trois ordres de diffraction placés aux sommets d'un triangle équilatéral et d'intensités proches (OD2).

6. Procédé selon l'une des revendications 1 à 5, caractérisé en ce que le masque de filtrage au plan focal possède au moins trois zones transparentes (M51-M53) formant un groupe d'éléments transparents.

7. Procédé selon l'une des revendications 1 à 5, caractérisé en ce que le masque de filtrage au plan focal possède au moins trois zones réfléchissantes (M61-M63) formant un groupe d'éléments réfléchissants.

8. Procédé selon l'une des revendications 1 à 5, caractérisé en ce que le masque de filtrage au plan focal possède un groupe d'éléments transparents (M51-M53) et un groupe d'éléments réfléchissants (M61-M63).

9. Procédé selon la revendication 6, caractérisé en ce que le groupe d'éléments transparents du masque (M51-M53), placé perpendiculairement à l'axe du faisceau, est constitué de trois secteurs d'une couronne circulaire, dont les angles d'ouverture sont d'environ 60°, et les étendues radiales sont choisies en fonction du domaine spectral d'analyse du faisceau de lumière.

10. Procédé selon la revendication 8, caractérisé en ce que le masque de filtrage, placé en oblique sur l'axe du faisceau, possède, sur une même couronne elliptique, des secteurs transparents (M51-M53) alternant avec des secteurs réfléchissants (M61-M63), et en ce que les opérations b3) et b4) sont conduites séparément pour les sous-faisceaux réfléchis ($L'2, P'_0, P_{a2}$) et transmis ($L2, P_0, P_{a1}$) par le masque.

11. Procédé selon l'une des revendications précédentes, caractérisé en ce que le réseau (GR) est du type réseau de phase, et constitué de micro-lentilles.

12. Procédé selon l'une des revendications 1 à 10, caractérisé en ce que le réseau (GR), du type réseau d'intensité, est constituée de régions alternativement transparentes et non transparentes pour la lumière (GR8A,GR8B,GR8C).

13. Procédé selon l'une des revendications 1 à 10, caractérisé en ce que le réseau est un réseau (GR9) de trièdres, arrangé selon une maille élémentaire hexagonale.

14. Procédé selon la revendication 13, caractérisé en ce que le motif (GR90) du maillage bi-dimensionnel (GR9) comprend trois surfaces d'égale inclinaison sur une base plane, agencées selon une symétrie d'ordre 3 autour d'un même axe, et en ce que l'inclinaison de ces surfaces est choisie en fonction du pas du réseau.

15. Procédé selon la revendication 14, caractérisé en ce que les trois surfaces (91-93) sont des losanges et en ce que le réseau est non-lacunaire.

16. Dispositif pour l'analyse de la surface d'onde d'un faisceau de lumière, comprenant:

- une optique d'entrée ($O_2, O_4$) pour définir un plan de référence ($P_c$), optiquement conjugué du plan dans lequel est analysée la surface d'onde ($P_D$),

- un réseau à maillage bi-dimensionnel (GR), placé dans ce plan de référence ($P_c$), perpendiculairement au faisceau, ce qui provoque une diffraction du faisceau en différents sous-faisceaux, dûs aux différents ordres de diffraction, et

- des moyens de traitement optique et d'observation de l'image formée par l'interférence des sous-faisceaux, image dont les déformations sont liées aux gradients de la surface d'onde analysée,

caractérisé en ce que les moyens de traitement optique et d'observation comprennent:

- une première optique ($L_1$), pour focaliser conjointement les sous-faisceaux issus du plan du réseau, en un plan focal intermédiaire ($P_F$),

- dans ce plan focal ($P_F$) ou à proximité, un masque (M) propre à sélectionner parmi les sous-faisceaux, ceux qui proviennent d'au moins trois ordres de diffraction distincts,

- une seconde optique ($L_2$), pour amener les sous-faisceaux sélectionnés à un plan ($P_0$), dit de sensibilité nulle, conjugué du plan du réseau, et

- des moyens d'observation de l'image d'interférence dans un plan de travail ($P_a$), situé à distance choisie (d) du plan de sensibilité nulle.

**Patentansprüche**

1. Verfahren zur Analyse einer Lichtbündel-Wellenfront, umfassend:

a) das Anordnen eines Beugungsgitters (GR) mit zweidimensionalem Netzwerk in einer zum Lichtbündel senkrechten Ebene ($P_c$), optisch konjugiert zu der Analyseebene der Wellenfront ($P_D$), was eine Beugung bzw. Diffraktion des Bündels in verschiedene Teilbündel verursacht, zurückzuführen auf die unterschiedlichen Beugungsordnungen, und

b) das Erzeugen und Beobachten, in einer Ebene ($P_a$), des durch Interferenz der Teilbündel gebildeten bzw. geformten Bildes, wobei die Verformungen dieses Bildes verbunden sind mit den Gradienten der analysierten Wellenfront,

**dadurch gekennzeichnet,** daß die Operation b) umfaßt:

b1) die gemeinsame Fokussierung der von der Gitterebene kommenden Teilbündel in eine Zwischenfokalebene ($P_F$),

b2) die Filtrierung, nahe dieser Fokalebene, der Teilbündel durch eine Maske (M), fähig dort wenigstens drei verschiedene Beugungsordnungen zu selektieren,

b3) die optische Wiederaufnahme bzw. Wiederbelebung der selektierten Teilbündel, um sie in eine zu der Gitterebene konjugierte sogenannten Null-Empfindlichkeit-Ebene ($P_0$) zu bringen, und

b4) die Beobachtung des Interferenzbildes in einer Arbeitsebene ($P_a$), die einen gewählten Abstand (d) von der genannten Null-Empfindlichkeit-Ebene hat.

2. Verfahren nach Anspruch 1, dadurch gekennzeichnet, daß in der Operation b2) die Maske (M) angeordnet ist, um wenigstens drei Teilbündel zu entnehmen, die ähnliche bzw. gleiche Intensitäten haben und Auftreffpunkte, die in der Zwischenfokalebene nicht fluchten.

3. Verfahren nach Anspruch 2, dadurch gekennzeichnet, daß die Maske (M) angeordnet ist, um wenigstens drei Teilbündel zu entnehmen, die Auftreffpunkte besitzen, die sich an den Spitzen eines gleichseitigen Dreiecks in der Zwischenfokalebene befinden.

4. Verfahren nach Anspruch 3, dadurch gekennzeichnet, daß das Gitter (GR1) eine hexagonale Elementarmasche aufweist und ein Muster (GR8C), so daß das reziproke Netzwerk drei Beugungsordnungen ähnlicher Intensitäten trägt bzw. umfaßt, die sich an den Spitzen eines gleichseitigen Dreiecks befinden (OD1).

5. Verfahren nach Anspruch 3, dadurch gekennzeichnet, daß das Citter (GR2) eine hexagonale Elementarmasche aufweist und ein Muster (GR8B), so daß das reziproke Netzwerk drei Beugungsordnungen ähnlicher Intensitäten trägt bzw. umfaßt, die sich an den Spitzen eines gleichseitigen Dreiecks befinden (OD2).

6. Verfahren nach einem der Ansprüche 1 bis 5, dadurch gekennzeichnet, daß die Filtriermaske in der Fokalebene wenigstens drei transparente Zonen (M51-M53) besitzt, die eine Gruppe transparenter Elemente bilden.

7. Verfahren nach einem der Ansprüche 1 bis 5, dadurch gekennzeichnet, daß die Filtriermaske in der Fokalebene wenigstens drei reflektierende Zonen (M61-M63) besitzt, die eine Gruppe reflektierender Elemente bilden.

8. Verfahren nach einem der Ansprüche 1 bis 5, dadurch gekennzeichnet, daß die Filtriermaske in der Fokalebene eine Gruppe transparenter Elemente (M51-M53) und eine Gruppe reflektierender Elemente (M61-M63) besitzt.

9. Verfahren nach Anspruch 6, dadurch gekennzeichnet, daß die Gruppe transparenter Elemente der Maske (M51-M53), senkrecht zur Achse des Bündels angeordnet, gebildet wird durch drei Sektoren eines kreisförmigen Rings, deren Öffnungswinkel ungefähr 60° betragen und deren radiale Ausdehnungen in Abhängigkeit von dem Analysenspektralbereich des Lichtbündels gewählt werden.

10. Verfahren nach Anspruch 8, dadurch gekennzeichnet, daß die Filtriermaske, schräg in der Bündelachse angeordnet, in demselben elliptischen Ring transparente Sektoren (M51-M53) im Wechsel mit reflektierenden Sektoren (M61-M63) aufweist, und daß die Operationen b3) und b4) getrennt durchgeführt werden für die von der Maske reflektierten (L'2,P'$_C$,P$_{a2}$) und durchgelassenen (L2, P$_0$,P$_{a1}$) Teilbündel.

11. Verfahren nach einem der vorangehenden Ansprüche, dadurch gekennzeichnet, daß das Gitter (GR) vom Typ Phasengitter ist und durch Mikrolinsen gebildet wird.

12. Verfahren nach einem der Ansprüche 1 bis 10, dadurch gekennzeichnet, daß das Gitter (GR), vom Typ Intensitätsgitter, abwechselnd gebildet wird durch für das Licht durchlässige und undurchlässige Gebiete (GR8A,GR8B,GR8C).

13. Verfahren nach einem der Ansprüche 1 bis 10, dadurch gekennzeichnet, daß das Gitter ein Trieder-Gitter (GR9) ist, angeordnet ensprechend einer hexagonalen Elementarmasche.

14. Verfahren nach Anspruch 13, dadurch gekennzeichnet, daß das Muster (GR90) des zweidimensionalen Netzwerks (GR9) drei Flächen gleicher Neigung auf einer ebenen Basis umfaßt, angeordnet entsprechend einer Symmetrie der Ordnung 3 bzw. der 3. Ordnung um dieselbe Achse herum, und dadurch, daß die Neigung dieser Flächen gewählt wird in Abhängigkeit von der Gitterteilung.

15. Verfahren nach Anspruch 14, dadurch gekennzeichnet, daß die drei Flächen (91-93) Rhomben sind und dadurch, daß das Gitter lückenlos ist.

16. Vorrichtung zur Analyse der Wellenfront eines Lichtbündels, umfassend:

- eine Eintrittsoptik ($O_2,O_4$), um eine Bezugsebene ($P_c$) zu definieren, die optisch konjugiert ist zu der Ebene, in der die Wellenfront ($P_D$) analysiert wird,

- ein Gitter mit zweidimensionalem Netzwerk (GR), angeordnet in der Bezugsebene ($P_c$), senkrecht zum Bündel, was eine Beugung bzw. Diffraktion des Bündel in verschiedene Teilbündel verursacht, zurückzuführen auf die unterschiedlichen Beugungsordnungen, und

- Einrichtungen zur optischen Verarbeitung und zur Beobachtung des durch die Interferenzen der Teilbündel gebildeten bzw. geformten Bildes, wobei die Verformungen dieses Bildes verbunden sind mit den Gradienten der analysierten Wellenfront,

**dadurch gekennzeichnet,** daß die Einrichtungen zur optischen Verarbeitung und zur Beobachtung umfassen:

- eine erste Optik ($L_1$), um die von der Gitterebene kommenden Teilbündel in eine Zwischenfokalebene ($P_F$) zu fokussieren,

- in dieser Fokalebene, oder in der Nähe, eine Maske (M), fähig aus den Teilbündeln diejenigen zu selektieren, die von wenigstens drei unterschiedlichen Beugungsordnungen stammen,

- eine zweite Optik ($L_2$), um die selekierten Teilbündel in eine zu der Gitterebene konjugierte sogenannte Null-Emfindlichkeit-Ebene ($P_0$) zu bringen, und

- Einrichtungen zur Beobachtung des Interferenzbildes in einer Arbeitsebene ($P_a$), die einen gewählten Abstand (d) von der genannten Null-Empfindlichkeit-Ebene hat.

## Claims

1. Process for the analysis of the surface of a wave of a light beam, in which:

    a) a diffraction system (GR) with a two-dimensional grid is placed in a plane ($P_c$) which is perpendicular to the beam, optically connected to the plane of analysis of the wave surface ($P_c$), which causes a diffraction of the beam into different sub-beams, owing to the various orders of diffraction; and

    b) the image formed by the interference of the sub-beams is created and observed in a plane ($P_a$), the deformations of which image are connected to the gradients of the analyzed wave surface;

characterised in that the operation b) comprises:

    b1) the joint focussing of the sub-beams given off in the plane of the system, in an intermediate focal plane ($P_F$);

    b2) in the vicinity of this focal plane, the filtering of the sub-beams by a mask (M) suitable for selecting at least three different separation orders of diffraction;

    b3) the optical recovery of selected sub-beams, to bring them into a plane ($P_0$), called nil sensitivity, joint with the plane of the system; and

    b4) the observation of the interference image in an operating plane ($P_a$) located at a selected distance (d) from the plane of nil sensitivity.

2. Process according to Claim 1, characterised in that in the operation b2), the mask (M) is arranged to extract at least three sub-beams having similar intensities, and collision which are not aligned in the intermediate focal plane.

3. Process according to Claim 2, characterised in that the mask (M) is arranged to extract at least three sub-beams having collisions located at the vertices of an equilateral triangle in the intermediate focal plane.

4. Process according to Claim 3, characterised in that the system (GR1) has a simple hexagonal grid and a motif (GR8C) such that the reciprocal grid supports three orders of diffraction placed at the vertices of an equilateral triangle and of close intensities (OD1).

5. Process according to Claim 3,

characterised in that the system (GR2) has a simple rectangular grid and a motif (GR8B) such that the reciprocal grid supports three orders of diffraction located at the vertices of an equilateral triangle and of close intensities (OD2).

6. Process according to one of Claims 1 to 5, characterised in that the filtering mask on the focal plane has at least three transparent zones (M51 - M53) forming a group of transparent elements.

7. Process according to one of Claims 1 to 5, characterised in that the filtering mask on the focal plane has at least three reflecting zones (M61-M63) forming a group of reflecting elements.

8. Process according to one of Claims 1 to 5, characterised in that the filtering mask of the focal plane has a group of transparent elements (M51-M53) and a group of reflective elements (M16-M63).

9. Process according to Claim 6, characterised in that the group of transparent elements of the mask (M15-M53), placed perpendicular to the axis of the beam, is formed of three sectors of a circular annulus annulus, the opening angles of which are about 60°, and the radial extensions of which are selected as a function of the range of spectral analysis of the light beam.

10. Process according to Claim 8, characterised in that the filtering mask, placed at a slant on the axis of the beam has, on one same elliptical annulus, transparent sectors (M51-M53) alternating with reflecting sectors (M61-M63) and in that the operations b3) and b4) are conducted separately for the sub-beams which are reflected $(L'2,P'_C,P_{a2})$ and transmitted $(L2,P_0,P_{a1})$ by the mask.

11. Process according to one of the preceding Claims, characterised in that the system (GR) is of the phase-system type, and formed of micro-lenses.

12. Process according to one of Claims 1 to 10, characterised in that the system (GR) of the intensity system type, is formed of areas which are, alternatively, transparent and non-transparent to light (GR8A, GR8B, GR8C).

13. Process according to one of Claims 1 to 10, characterised in that the system is a system (GR9) of trihedrons, arranged in a simple hexagonal grid.

14. Process according to Claim 13, characterised in that the motif (GR90) of the two-dimensional grid (GR9) comprises three surfaces of equal slant on a basic plane, arranged according to a symmetry of the order of 3 about one same axis, and in that the slant of these surfaces is selected as a function of the pitch of the system.

15. Process according to Claim 14, characterised in that the three surfaces (91-93) are lozenge-shaped and in that the system is non-lacunar.

16. Device for the analysis of the surface of the wave of a light beam, comprising:

- an input lens $(O_2,O_4)$ to define a reference plane $(P_2)$, which is optically joined with the plane in which the surface of the wave $(P_D)$ is analyzed

- a two-dimensional grid system (GR) located in this reference plane $(P_C)$, perpendicular to the beam, which causes a diffraction of the beam into various sub-beams, owing to the different magnitudes of diffraction; and

- means of optical processing and observation of the image formed by the interference of the sub-beams, in which image the deformations are connected to the slants of the surface of the wave which has been analyzed;

characterised in that the means for optical treatment and observation comprise:

- a first lens $(L_1)$, to focus, jointly, the sub-beams given off from the system plane into an intermediate focal plane $(P_F)$,

- in this focal plane $(P_F)$ or in the vicinity thereof, a mask (M) which is suitable for selecting, from among the sub-beams, those which come from at least three separate orders of diffraction,

- a second lens $(L_2)$, to bring the selected sub-beams to a plane $(P_0)$ called nil sensitivity, which is joined with the plane of the system; and

- means for observing the image of interference in an operating plane $(P_a)$, located at a selected distance (d) from the plane of nil sensitivity.

FIG.1

(FIG.1A)

FIG.1A

EP 0 654 655 B1

FIG.2A

FIG.2B

FIG.2C

FIG.2E

FIG.2F

FIG.2D

EP 0 654 655 B1

FIG.3A

FIG.3B

FIG.3C

FIG.4A

OD3

M3

FIG.4B

M3

OD3

ODM3

FIG.4C

T3

FIG.5

FIG.5A

FIG.6

FIG.7

FIG.8B

GR8B

FIG.8A

GR8A

FIG.8C

GR8C

EP 0 654 655 B1

FIG.9A

FIG.9B

GR90

91

92

93

GR9

17

FIG.10 A

FIG.10 B